# EUROPEAN PATENT APPLICATION

(11) **EP 4 768 356 A1**
(43) Date of publication of application: **01.07.2026**
(21) Application number: 25216305.0
(22) Date of filing: 17.11.2025
(51) Int. Cl.: B60W 40/072, B60W 50/14

(54) **CONTROL DEVICE AND CONTROL METHOD**

(30) Priority: 27.12.2024 JP 2024231967
(71) Applicant: Robert Bosch GmbH, 70442 Stuttgart (DE)
(72) Inventor: Takii, Hiromasa, Kanagawa, 2248501 (JP)
(74) Representative: Isarpatent

(57) **Abstract**

In a control device and a control method of the present invention, an execution unit of the control device executes a rider assistance operations to assist a rider, and the execution unit sets a plurality of evaluation points (Pk) on a road that a straddle-type vehicle (1) will pass through in the future, the evaluation points (Pk) having different passing times that are times when the straddle-type vehicle (1) will pass through, evaluates, with each of the plurality of evaluation points (Pk) as an evaluation target, an index of directional change, which is a change in a traveling direction (Dk) of the straddle-type vehicle (1) at a target evaluation point, which is the evaluation point (Pk) as the evaluation target, relative to a traveling direction (Dk) at a preceding evaluation point, which is the evaluation point (Pk) of which passing time is earlier than the target evaluation point, distinguishes the road into any one of a right corner section, a left corner section, and a straight road section based on the index, and executes the rider assistance operation based on a distinction result of the section.

## Description

### BACKGROUND OF THE INVENTION

### 1. Field of the Invention

The present disclosure relates to a control device and a control method that can improve safety.

### 2. Description of the Background Art

Various technologies have been proposed to assist a rider in driving a straddle-type vehicle such as a motorcycle. For example, JP2009-116882A discloses a driver assistance system that warns a motorcycle rider that he or she is inappropriately approaching an obstacle based on information detected by a sensor device that detects an obstacle in a traveling direction or substantially in the traveling direction.

### SUMMARY OF THE INVENTION

Here, a straddle-type vehicle tends to be more unstable in a posture than a four-wheeled automobile or the like, and therefore it is desirable to improve safety. Furthermore, in a straddle-type vehicle, a rider has lower visibility of surroundings compared to a four-wheeled automobile, which is another factor that makes it desirable to improve safety.

The present invention has been made in light of the above-mentioned problem, and an object of the present invention is to provide a control device and a control method that can improve safety.

A control device of the present invention is a control device for a rider assistance system that assists a rider of a straddle-type vehicle, the control device including an execution unit that executes a rider assistance operation to assist the rider, where the execution unit sets a plurality of evaluation points on a road that the straddle-type vehicle will pass through in the future, the evaluation points having different passing times that are times when the straddle-type vehicle will pass through, evaluates, with each of the plurality of evaluation points as an evaluation target, an index of change in a traveling direction of the straddle-type vehicle at a target evaluation point, which is the evaluation point as the evaluation target, relative to a traveling direction at a preceding evaluation point, which is the evaluation point of which the passing time is earlier than the target evaluation point, distinguishes the road into any one of a right corner section, a left corner section, and a straight road section based on the index, and executes the rider assistance operation based on a distinction result of the section.

A control method of the present invention is a control method for a rider assistance system that assists a rider of a straddle-type vehicle, where an execution unit of a control device executes a rider assistance operation to assist the rider, and the execution unit sets a plurality of evaluation points on a road that the straddle-type vehicle will pass through in the future, the evaluation points having different passing times that are times when the straddle-type vehicle will pass through, evaluates, with each of the plurality of evaluation points as an evaluation target, an index of change in a traveling direction of the straddle-type vehicle at a target evaluation point, which is the evaluation point as the evaluation target, relative to a traveling direction at a preceding evaluation point, which is the evaluation point of which the passing time is earlier than the target evaluation point, distinguishes the road into any one of a right corner section, a left corner section, and a straight road section based on the index, and executes the rider assistance operation based on a distinction result of the section.

In the control device and the control method of the present invention, the execution unit of the control device executes a rider assistance operations to assist a rider, and the execution unit sets the plurality of evaluation points on the road that the straddle-type vehicle will pass through in the future, the evaluation points having different passing times that are times when the straddle-type vehicle will pass through, evaluates, with each of the plurality of evaluation points as an evaluation target, an index of change in a traveling direction of the straddle-type vehicle at the target evaluation point, which is the evaluation point as the evaluation target, relative to the traveling direction at the preceding evaluation point, which is the evaluation point of which the passing time is earlier than the target evaluation point, distinguishes the road into any one of a right corner section, a left corner section, and a straight road section based on the index, and executes the rider assistance operation based on the distinction result of the section. This allows the straddle-type vehicle to assist the rider after grasping how the road that the straddle-type vehicle will pass through in the future will curve. Therefore, safety can be improved.

### BRIEF DESCRIPTION OF THE DRAWINGS

Fig. 1 is a schematic diagram illustrating a general configuration of a straddle-type vehicle according to an embodiment of the present invention.
Fig. 2 is a block diagram illustrating an example of a functional configuration of a control device according to the embodiment of the present invention.
Fig. 3 is a flowchart illustrating an example of a flow of processing performed by the control device according to the embodiment of the present invention.
Fig. 4 is a diagram for illustrating a process for determining a travel trajectory performed by the control device according to the embodiment of the present invention.
Fig. 5 is a diagram for illustrating a process for setting an evaluation point performed by the control device according to the embodiment of the present invention.
Fig. 6 is a diagram for illustrating a process for specifying a traveling direction performed by the control device according to the embodiment of the present invention.
Fig. 7 is a diagram for illustrating a process for evaluating a change angle performed by the control device according to the embodiment of the present invention.
Fig. 8 is a diagram for illustrating a process for distinguishing a section performed by the control device according to the embodiment of the present invention.
Fig. 9 is a diagram for illustrating an example of the process for distinguishing a section performed by the control device according to the embodiment of the present invention, which is different from the example illustrated in Fig. 8.
Fig. 10 is a flowchart illustrating an example of the flow of processing performed by the control device according to the embodiment of the present invention, which is different from the example illustrated in Fig. 3.

### DETAILED DESCRIPTION OF THE INVENTION

A control device and a control method according to the present invention will be described below with reference to the drawings.

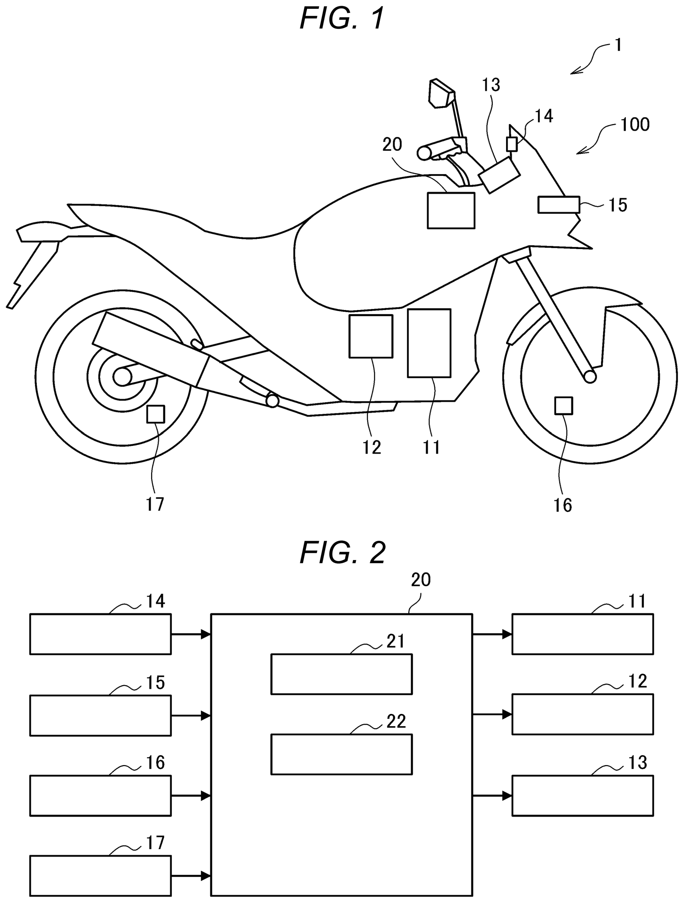

Although following description is of a control device used in a two-wheeled motorcycle (see straddle-type vehicle 1 in Fig. 1), a vehicle controlled by the control device according to the present invention may be a straddle-type vehicle other than a two-wheeled motorcycle. A straddle-type vehicle means a vehicle on which a rider sits astride. The straddle-type vehicles include, for example, motorcycles (two-wheeled vehicles and three-wheeled vehicles), bicycles, buggies, and the like. The motorcycles include vehicles powered by an engine and vehicles powered by an electric motor. The motorcycles include, for example, motorcycles, scooters, and electric scooters. The bicycle refers to a vehicle capable of being propelled along a road by a rider's force applied to pedals. The bicycles include standard bicycles, electrically assisted bicycles, and electric bicycles.

In addition, the following describes a case where an engine (specifically, engine 11 in Fig. 1 described below) is installed as a drive source capable of outputting power to drive a drive wheel, but a drive source (for example, an electric motor) other than an engine may also be installed as a drive source, or a plurality of drive sources may be installed.

In addition, the following describes a case where a control unit (specifically, hydraulic pressure control unit 12 in Fig. 1 described below) that controls hydraulic pressure of brake fluid is used as a control unit for a braking force generated at a wheel, but a control unit that controls a position of wheel's braking part itself by an electrical (so-called brake-by-wire) signal may also be used as a control unit for a braking force generated at a wheel.

Furthermore, configurations and operations described below are merely examples, and the control device and control method according to the present invention are not limited to such configurations and operations.

In addition, in the following, identical or similar descriptions are appropriately simplified or omitted. In addition, in each drawing, the same or similar members or parts are either not designated by symbols or are designated by the same symbols. Furthermore, detailed structures are appropriately simplified or omitted from the illustrations.

### <Configuration of Straddle-type vehicle>

A configuration of a straddle-type vehicle 1 according to an embodiment of the present invention will be described.

Fig. 1 is a schematic diagram illustrating a general configuration of the straddle-type vehicle 1. The straddle-type vehicle 1 is a two-wheeled motorcycle that corresponds to an example of a straddle-type vehicle according to the present invention. As illustrated in Fig. 1, the straddle-type vehicle 1 includes an engine 11, a hydraulic pressure control unit 12, a display device 13, a navigation device 14, a surrounding environment sensor 15, a front wheel speed sensor 16, a rear wheel speed sensor 17, and a control device (ECU) 20.

The straddle-type vehicle 1 is equipped with a rider assistance system 100 that assists a rider of the straddle-type vehicle 1. The rider assistance system 100 includes the above-mentioned components (specifically, the engine 11, the hydraulic pressure control unit 12, the display device 13, the navigation device 14, the surrounding environment sensor 15, the front wheel speed sensor 16, the rear wheel speed sensor 17, and the control device 20).

The engine 11 corresponds to an example of a drive source of the straddle-type vehicle 1, and is capable of outputting power for driving a drive wheel (specifically, rear wheel). For example, the engine 11 is provided with one or more cylinders each having a combustion chamber formed therein, a fuel injection valve that injects fuel into the combustion chamber, and a spark plug. When fuel is injected from the fuel injection valve, a mixture containing air and fuel is formed in the combustion chamber, and the mixture is ignited by the spark plug and burns. This causes pistons provided in the cylinders to reciprocate, causing a crankshaft to rotate. A throttle valve is provided in an intake pipe of the engine 11, and an amount of intake air into the combustion chamber changes depending on an opening of the throttle valve.

The hydraulic pressure control unit 12 is a unit that has a function of controlling a braking force acting on a wheel. For example, the hydraulic pressure control unit 12 is provided on an oil passage connecting a master cylinder and a wheel cylinder, and includes components (for example, control valve and pump) for controlling brake hydraulic pressure in the wheel cylinder. By controlling an operation of the components of the hydraulic pressure control unit 12, the braking force acting on the wheel is controlled. The hydraulic pressure control unit 12 may control each of the braking forces acting on both the front and rear wheels, or may control only the braking force acting on one of the front and rear wheels.

The display device 13 has a display function for visually displaying information to the rider. The display device 13 may be, for example, a liquid crystal display. The display device 13 is provided, for example, in front of a handlebar of the straddle-type vehicle 1. However, an arrangement of the display device 13 to a vehicle body is not particularly limited.

The navigation device 14 is a device that provides guidance on a route from a current position of the straddle-type vehicle 1 to a destination desired by the rider. The navigation device 14 displays various pieces of information (for example, the current position of the straddle-type vehicle 1, a travel route to be guided, a position of the destination, a distance on the travel route from the current position of the straddle-type vehicle 1 to the destination, and a period of time to reach the destination) related to route guidance. Furthermore, the navigation device 14 can acquire position information of the straddle-type vehicle 1 based on information transmitted from Global Positioning System (GPS) satellites.

The surrounding environment sensor 15 detects surrounding environment information relating to the environment around the straddle-type vehicle 1. Specifically, the surrounding environment sensor 15 is provided at the front of the straddle-type vehicle 1 and detects the surrounding environment information in front of the straddle-type vehicle 1. The surrounding environment information detected by the surrounding environment sensor 15 is output to the control device 20.

The surrounding environment information detected by the surrounding environment sensor 15 may be information (for example, relative position, relative distance, relative speed, relative acceleration, and the like) related to distance or direction to an object located around the straddle-type vehicle 1, or may be characteristics (for example, type of the object, shape of the object itself, mark attached to the object, and the like) of the object located around the straddle-type vehicle 1. The surrounding environment sensor 15 is, for example, a radar, a lidar sensor, an ultrasonic sensor, a camera, or the like.

The surrounding environment information can also be detected by surrounding environment sensors mounted to other vehicles or infrastructure facilities. That is, the control device 20 can also acquire surrounding environment information via wireless communication with other vehicles or infrastructure facilities.

The front wheel speed sensor 16 is a wheel speed sensor that detects the wheel speed (for example, rotational frequency per unit time [rpm] of the front wheel or the distance traveled per unit time [km/h], and the like) of the front wheel and outputs the detection result. The front wheel speed sensor 16 may also detect other physical quantities that can be substantially converted into the wheel speed of the front wheel. The front wheel speed sensor 16 is provided to the front wheel.

The rear wheel speed sensor 17 is a wheel speed sensor that detects the wheel speed (for example, rotational frequency per unit time [rpm] of the rear wheel or the distance traveled per unit time [km/h], and the like) of the rear wheel and outputs the detection result. The rear wheel speed sensor 17 may also detect other physical quantities that can be substantially converted into the wheel speed of the rear wheel. The rear wheel speed sensor 17 is provided to the rear wheel.

The control device 20 controls an operation of the rider assistance system 100. For example, part or all of the control device 20 is configured by a microcomputer, a microprocessor unit, or the like. Furthermore, for example, part or all of the control device 20 may be configured with one whose firmware can be updated or the like, or may be a program module or the like that is executed by instructions from a CPU or the like. The control device 20 may be, for example, a single device or may be divided into multiple devices.

Fig. 2 is a block diagram illustrating an example of a functional configuration of the control device 20. As illustrated in Fig. 2, the control device 20 includes, for example, an acquisition unit 21 and an execution unit 22. The control device 20 communicates with each device (for example, the engine 11, the hydraulic pressure control unit 12, the display device 13, the navigation device 14, the surrounding environment sensor 15, the front wheel speed sensor 16, and the rear wheel speed sensor 17) of the rider assistance system 100. The control device 20 can also control an operation of each device (for example, the engine 11, the hydraulic pressure control unit 12, and the display device 13) of the rider assistance system 100.

The acquisition unit 21 acquires information from each device of the rider assistance system 100 and outputs it to the execution unit 22. For example, the acquisition unit 21 acquires information from the navigation device 14, the surrounding environment sensor 15, the front wheel speed sensor 16, and the rear wheel speed sensor 17. In this specification, obtaining information may include extracting or generating (for example, calculating) information.

For example, the acquisition unit 21 can acquire position information on the straddle-type vehicle 1 based on output information from the navigation device 14. The position information may be information that directly indicates the position of the straddle-type vehicle 1 or may be information that can be substantially converted into the position of the straddle-type vehicle 1. The acquisition unit 21 can also acquire map data based on output information from the navigation device 14.

Furthermore, for example, the acquisition unit 21 can acquire speed information of the straddle-type vehicle 1 based on output information from the front wheel speed sensor 16 and output information from the rear wheel speed sensor 17. The speed information may be information that directly indicates the speed of the straddle-type vehicle 1 or may be information that can be substantially converted into the speed of the straddle-type vehicle 1.

In this specification, the output information from a sensor or the like may be the output itself of the sensor or the like, or may be information extracted from the output.

The execution unit 22 can execute a rider assistance operation to assist the rider. The execution unit 22 can execute various rider assistance operations by controlling the operation of each device, such as the engine 11, the hydraulic pressure control unit 12, and the display device 13, for example. Examples of the rider assistance operation include a notification operation for notifying the rider, a speed control operation for automatically controlling the speed of the straddle-type vehicle 1, and the like. The rider assistance operation will be described in detail below.

### <Operation of Control Device>

The operation of the control device 20 according to the embodiment of the present invention will be described.

Here, a posture of the straddle-type vehicle 1 is more likely to become unstable than that of a four-wheeled automobile or the like, and therefore, it is desirable to improve safety. Furthermore, in the straddle-type vehicle 1, the rider has lower visibility of surroundings compared to a four-wheeled automobile, or the like, which is another factor that makes it desirable to improve safety. Therefore, in this embodiment, the execution unit 22 of the control device 20 performs a process of distinguishing the road that the straddle-type vehicle 1 will pass through in the future into one of a right corner section, a left corner section, and a straight road section, and performs rider assistance operations based on the section distinction result. In this embodiment, as will be described below, safety is improved by implementing measures for processing related to section division. An example of processing performed by the control device 20 will be described below.

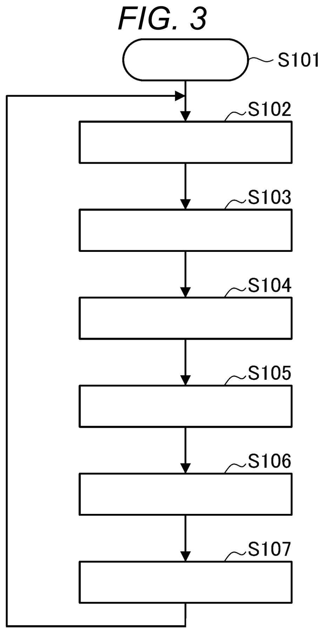

Fig. 3 is a flowchart illustrating an example of a flow of the processing performed by the control device 20. Step S101 in Fig. 3 corresponds to start of a process flow illustrated in Fig. 3. For example, the process flow illustrated in Fig. 3 starts when the rider assistance operation executed in step S107 described below is enabled (that is, when it becomes executable).

when the process flow illustrated in Fig. 3 starts, in step S102, the execution unit 22 determines a travel trajectory of the straddle-type vehicle 1 on the road that the straddle-type vehicle 1 will pass through in the future.

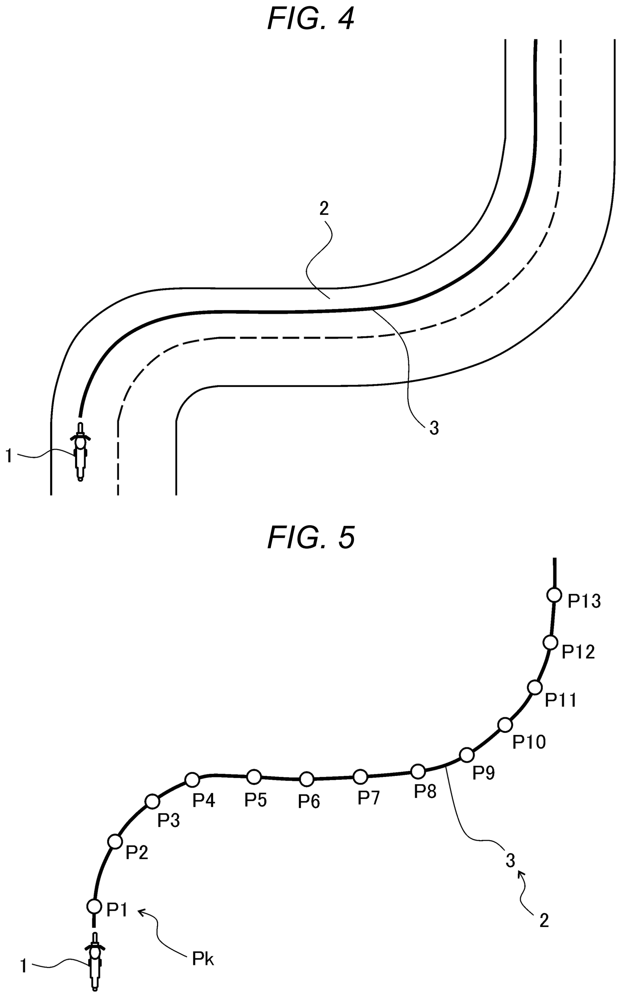

Fig. 4 is a diagram for illustrating a process for determining a travel trajectory 3 performed by the control device 20. Fig. 4 illustrates a road 2 that the straddle-type vehicle 1 will pass through in the future. The travel trajectory 3 is a trajectory that the straddle-type vehicle 1 will pass in the future. As illustrated in Fig. 4, the travel trajectory 3 is a trajectory that follows the shape of the road 2.

The execution unit 22 determines the travel trajectory 3 based on, for example, output information from the navigation device 14. For example, the execution unit 22 determines the travel route to be guided set in the navigation device 14 as the travel trajectory 3.

In addition, when it is possible to obtain information indicating which lane of the road 2 the travel route passes through, the execution unit 22 may determine, for example, a center line of the lane through which the travel route passes as the travel trajectory 3. On the other hand, when it is not possible to obtain information indicating which lane of the road 2 the travel route passes through, the execution unit 22 may, for example, determine a center line of the entirety of the road 2 through which the travel route passes as the travel trajectory 3.

In addition, when a travel route is not set in the navigation device 14, the execution unit 22 may specify the road 2 that the straddle-type vehicle 1 will pass through in the future, for example, based on map information and position information of the straddle-type vehicle 1, and determine the center line of the road 2 as the travel trajectory 3.

In step S103 after step S102 in Fig. 3, the execution unit 22 sets a plurality of evaluation points Pk on the road 2 that the straddle-type vehicle 1 will pass through in the future, the evaluation points Pk having different passing times, which are the times when the straddle-type vehicle 1 will pass through.

As will be described below, in the process flow illustrated in Fig. 3, the road 2 is distinguished into any one of a right corner section, a left corner section, and a straight road section, focusing on a traveling direction Dk of the straddle-type vehicle 1 at each evaluation point Pk.

Fig. 5 is a diagram for illustrating a process for setting the evaluation point Pk performed by the control device 20. As illustrated in Fig. 5, the evaluation points Pk are arranged at intervals on the travel trajectory 3. In the example of Fig. 5, thirteen evaluation points Pk, that is, evaluation points P1 to P13, are illustrated as the evaluation points Pk. However, the number of the evaluation points Pk to be set is not limited to this example.

The execution unit 22 sets a plurality of evaluation points Pk on the travel trajectory 3 at intervals of a certain passing time difference, for example. The passing time difference is a difference in passing time between two points. For example, the execution unit 22 assumes that the straddle-type vehicle 1 travels at a constant speed and sets a plurality of evaluation points Pk so that the passing time difference between two adjacent evaluation points Pk is a predetermined passing time difference. For example, the execution unit 22 may set a plurality of evaluation points Pk on the assumption that the speed of the straddle-type vehicle 1 is maintained at the current speed. The execution unit 22 may set a plurality of evaluation points Pk on the assumption that the speed of the straddle-type vehicle 1 will be maintained at a speed higher or lower than the current speed.

The execution unit 22 may set a plurality of evaluation points Pk on the travel trajectory 3 at regular intervals. For example, the execution unit 22 may set a plurality of evaluation points Pk so that the distance between two adjacent evaluation points Pk is a predetermined distance.

Here, when the predetermined passing time difference or the predetermined distance is excessively short, density of the evaluation points Pk will become excessively high, which is likely to increase a calculation load. On the other hand, when the above-mentioned predetermined passing time difference or the above-mentioned predetermined distance is excessively long, the density of the evaluation points Pk will become excessively low, and accuracy of the section division described below will be likely to be low (that is, the sections that need to be distinguished can not be appropriately distinguished). Therefore, it is preferable that the above-mentioned predetermined passing time difference or the above-mentioned predetermined distance be set appropriately so as not to increase the calculation load and not to reduce the accuracy of the section division described below.

In step S104 after step S103 in Fig. 3, the execution unit 22 specifies the traveling direction Dk of the straddle-type vehicle 1 at each evaluation point Pk.

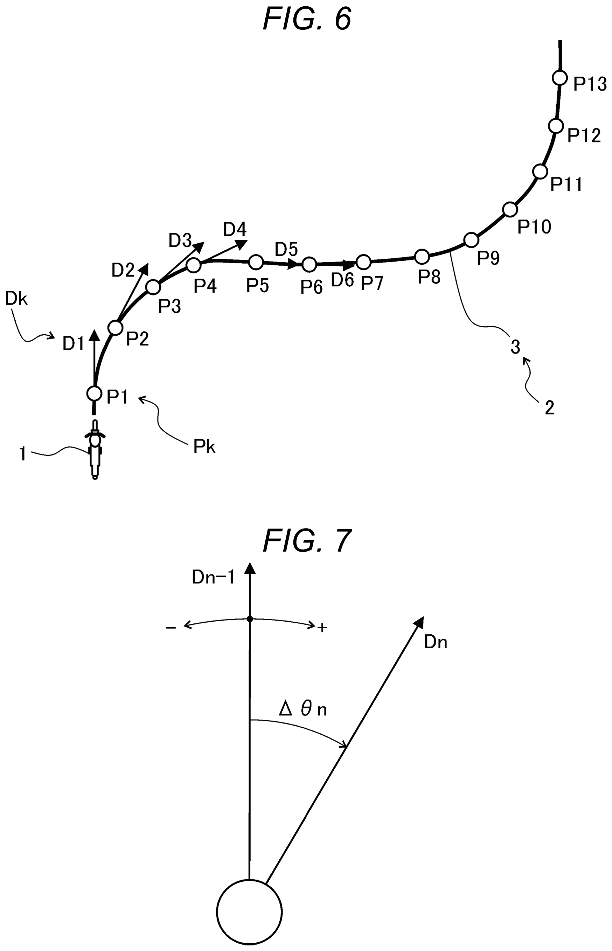

Fig. 6 is a diagram for illustrating a process for specifying the traveling direction Dk performed by the control device 20. in order to facilitate understanding, Fig. 6 illustrates only six traveling directions D1 to D6 corresponding to the evaluation points P1 to P6, respectively, as the traveling direction Dk. However, in step S104, the traveling directions Dk corresponding to the evaluation points P7 to P13 are also actually specified.

For example, the execution unit 22 specifies a tangent direction of the travel trajectory 3 at the evaluation point Pk as the traveling direction Dk at the evaluation point Pk. For example, the execution unit 22 can acquire information on the tangent direction at the evaluation point Pk of the travel trajectory 3 based on map data acquired using the navigation device 14. Then, the execution unit 22 can specify the traveling direction Dk at each evaluation point Pk based on the information thus obtained.

In step S105 after step S104 in Fig. 3, the execution unit 22 evaluates a change angle Δθn at each evaluation point Pk.

Hereinafter, an evaluation point Pk that is an evaluation target for the change angle Δθn is referred to as a target evaluation point Pn, and an evaluation point Pk of which passing time is earlier than the target evaluation point Pn is referred to as a preceding evaluation point Pn-1. Specifically, the preceding evaluation point Pn-1 is the evaluation point Pk (that is, the evaluation point Pk immediately preceding the target evaluation point Pn) adjacent to the target evaluation point Pn.

Fig. 7 is a diagram for illustrating a process for evaluating the change angle Δθn performed by the control device 20. Fig. 7 illustrates a traveling direction Dn at the target evaluation point Pn and a traveling direction Dn-1 at the preceding evaluation point Pn-1 when the target evaluation point Pn and the preceding evaluation point Pn-1 are superimposed at a position of a white circle. As illustrated in Fig. 7, the change angle Δθn of the target evaluation point Pn is an angle indicating the change (hereinafter referred to as "directional change") of the traveling direction Dn at the target evaluation point Pn relative to the traveling direction Dn-1 at the preceding evaluation point Pn-1. That is, the change angle Δθn corresponds to an index of the above-mentioned directional change.

The execution unit 22 evaluates an angle indicating a directional change (that is, the directional change from the traveling direction Dn-1 to the traveling direction Dn) of the traveling direction Dn relative to the traveling direction Dn-1 as the change angle Δθn based on the traveling direction Dn at the target evaluation point Pn and the traveling direction Dn-1 at the preceding evaluation point Pn-1. In the example of Fig. 7, positive and negative values of the change angle Δθn are defined such that a clockwise direction is positive and a counterclockwise direction is negative. Thus, the change angle Δθn indicates a rotation direction (that is, the rotation direction from the traveling direction Dn-1 to the traveling direction Dn) of the directional change of the traveling direction Dn relative to the traveling direction Dn-1 depending on whether it is positive or negative. An absolute value of the change angle Δθn indicates an amount of (that is, magnitude of the angle formed by the traveling direction Dn and the traveling direction Dn-1) directional change of the traveling direction Dn relative to the traveling direction Dn-1.

Then, the execution unit 22 evaluates the change angle Δθn for each of the evaluation points P1 to P13 as described above. For example, the execution unit 22 evaluates an angle indicating the directional change of the traveling direction D1 at the evaluation point P1 relative to a traveling direction D0 at an evaluation point P0 as a change angle Δθ1 at the evaluation point P1. Although not illustrated in Figs. 5 and 6, the evaluation point P0 is an evaluation point Pk immediately preceding the evaluation point P1. Furthermore, for example, the execution unit 22 evaluates an angle indicating the directional change of the traveling direction D2 at the evaluation point P2 relative to the traveling direction D1 at the evaluation point P1 as a change angle Δθ2 at the evaluation point P2. Furthermore, for example, the execution unit 22 evaluates an angle indicating the directional change of the traveling direction D3 at the evaluation point P3 relative to the traveling direction D2 at the evaluation point P2 as a change angle Δθ3 at the evaluation point P3. In this way, the execution unit 22 sequentially evaluates the change angle Δθn at each evaluation point Pk.

In step S106 after step S105 in Fig. 3, the execution unit 22 distinguishes the road 2 into any one of a right corner section, a left corner section, and a straight road section based on the change angle Δθn.

The right corner section refers to a section (that is, a section that curves clockwise when viewed from above) of the road 2 that curves to the right. The left corner section refers to a section (that is, a section that curves counterclockwise when viewed from above) of the road 2 that curves to the left. The straight road section refers to a section of the road 2 that is straight and not curved, or a section that is almost straight and almost not curved.

The execution unit 22 determines, for example, based on the change angle Δθn, whether the directional change at each evaluation point Pk on the travel trajectory 3 relative to the preceding evaluation point Pk is a clockwise change, a counterclockwise change, or neither a clockwise change nor a counterclockwise change. Then, based on the result of the determination, the execution unit 22 distinguishes the road 2 into any one of a right corner section, a left corner section, and a straight road section.

For example, the execution unit 22 distinguishes a first range, which is a range of the road 2 where there are a first number or more of consecutive evaluation points Pk where the directional change is determined to be a clockwise change based on the change angle Δθn, as a right corner section. For example, when the change angle Δθn at the evaluation point Pk is a positive value and the absolute value of the change angle Δθn is equal to or greater than a reference value, the execution unit 22 determines that the directional change at the evaluation point Pk is a clockwise change. In other words, the execution unit 22 determines that the range of the road 2 where there are a first number or more of consecutive evaluation points Pk where the change angle Δθn is a positive value and the absolute value of the change angle Δθn is equal to or greater than the reference value is the first range, and distinguishes it as a right corner section.

In this specification, when there are N consecutive evaluation points Pk that satisfy a certain condition, it means that the N evaluation points Pk that satisfy the condition are lined up in order without any evaluation points Pk that do not satisfy the condition in between.

The reference value can be set to a value that allows appropriate determination of whether a directional change has occurred little or a large amount, for example. The first number can be set to a value that allows appropriate determination of whether evaluation points Pk with similar directional changes are connected in a relatively long range.

Here, an evaluation point Pk where the change angle Δθn is a positive value and the absolute value of the change angle Δθn is equal to or greater than the reference value is a point where the directional change is a clockwise change, and therefore is likely to be included in a right corner section. Therefore, by distinguishing the first range, in which a first number or more of such evaluation points Pk are consecutive, as a right corner section, the right corner section can be appropriately distinguished taking into account the tendency of directional changes over a wide range of the road 2.

Also, for example, the execution unit 22 distinguishes a second range of the road 2 as a left corner section, which is a range in which there are a first number or more of consecutive evaluation points Pk where the directional change is determined to be a counterclockwise change based on the change angle Δθn. For example, when the change angle Δθn at the evaluation point Pk is a negative value and the absolute value of the change angle Δθn is equal to or greater than the reference value, the execution unit 22 determines that the directional change at the evaluation point Pk is a counterclockwise change. In other words, the execution unit 22 determines that the range of the road 2 where there are a first number or more of consecutive evaluation points Pk where the change angle Δθn is a negative value and the absolute value of the change angle Δθn is equal to or greater than the reference value is the second range, and distinguishes it as a left corner section.

Here, an evaluation point Pk where the change angle Δθn is a negative value and the absolute value of the change angle Δθn is equal to or greater than the reference value is a point where the directional change is a counterclockwise change, and therefore is likely to be included in a left corner section. Therefore, by distinguishing the second range, in which a first number or more of such evaluation points Pk are consecutive, as a left corner section, the left corner section can be appropriately distinguished taking into account the tendency of directional changes over a wide range of the road 2.

Also, for example, the execution unit 22 distinguishes a third range as a straight road section, which is a range of the road 2 where there are a second number or more of consecutive evaluation points Pk where the directional change is determined to be neither a clockwise change nor a counterclockwise change based on the change angle Δθn. For example, when the absolute value of the change angle Δθn at the evaluation point Pk is smaller than the reference value, the execution unit 22 determines that the directional change at the evaluation point Pk is neither clockwise nor counterclockwise. That is, the execution unit 22 determines a range of the road 2 where there are the second number or more of consecutive evaluation points Pk where the absolute value of the change angle Δθn is smaller than the reference value is a third range, and distinguishes the range as a straight road section.

The second number can be set to a value that allows appropriate determination of whether evaluation points Pk with similar directional changes are connected in a relatively long range.

Here, the evaluation point Pk where the absolute value of the change angle Δθn is smaller than the reference value is a point where the directional change is neither a clockwise change nor a counterclockwise change, and therefore is likely to be included in a straight road section. Therefore, by distinguishing the third range, in which a second number or more of such evaluation points Pk are consecutive, as a straight road section, the straight road section can be appropriately distinguished taking into account the tendency of directional changes over a wide range of the road 2.

The second number may be greater than, less than, or equal to the first number. However, the straight road section should be a section where the rider can accelerate safely, so it should be a relatively long section. Therefore, it is preferable to set the second number to be greater than the first number so that a section that is relatively long can be distinguished as a straight road section.

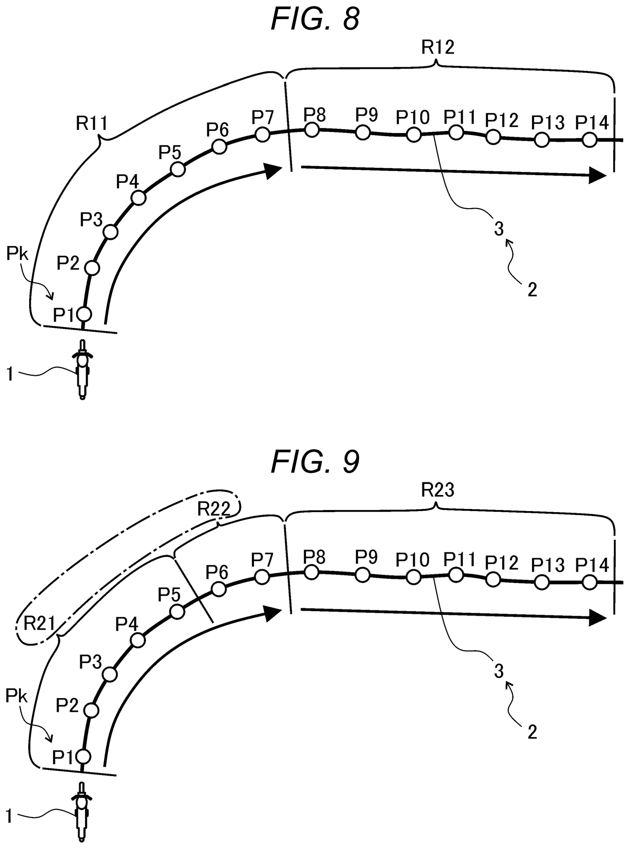

Fig. 8 is a diagram for illustrating a process for distinguishing a section performed by the control device 20. In an example of Fig. 8, for ease of understanding, the travel trajectory 3 different from that illustrated in the example of Figs. 4 to 6 is illustrated. In the example of Fig. 8, fourteen evaluation points Pk, that is, evaluation points P1 to P14, are illustrated as the evaluation points Pk.

In the example of Fig. 8, at each evaluation point Pk among the evaluation points P1 to P7, the change angle Δθn is a positive value, and the absolute value of the change angle Δθn is equal to or greater than the reference value. In this example, the first number is set to seven or less. Therefore, a range R11 of the road 2 from the evaluation point P1 to the evaluation point P7 corresponds to the first range in which there are a first number or more of consecutive evaluation points Pk where the directional change is determined to be a clockwise change based on the change angle Δθn. Therefore, the execution unit 22 distinguishes the range R11 as a right corner section.

In the example of Fig. 8, the change angle Δθn is smaller than the reference value at each of the evaluation points Pk from the evaluation points P8 to P14. In this example, the second number is set to seven or less. Therefore, a range R12 of the road 2 from the evaluation point P8 to the evaluation point P14 corresponds to the third range in which there are a second number or more of consecutive evaluation points Pk where the directional change is determined to be neither a clockwise change nor a counterclockwise change based on the change angle Δθn. Therefore, the execution unit 22 distinguishes the range R12 as a straight road section.

Fig. 9 is a diagram for illustrating an example of the process for distinguishing a section performed by the control device 20, which is different from the example illustrated in Fig. 8. In an example of Fig. 9, the travel trajectory 3 similar to that in the example of Fig. 8 is illustrated. In the example of Fig. 9, as in the example of Fig. 8, fourteen evaluation points Pk, that is, the evaluation points P1 to P14, are illustrated as the evaluation points Pk.

In the example of Fig. 9, at each evaluation point Pk of the evaluation points P1 to P5, the change angle Δθn is a positive value, and the absolute value of the change angle Δθn is equal to or greater than the reference value. In this example, the first number is set to five or less. Therefore, a range R21 of the road 2 from the evaluation point P1 to the evaluation point P5 corresponds to the first range in which there are a first number or more of consecutive evaluation points Pk where the directional change is determined to be a clockwise change based on the change angle Δθn. Therefore, the execution unit 22 distinguishes the range R21 as a right corner section.

In the example of Fig. 9, the change angle Δθn is smaller than the reference value at each of the evaluation points Pk from the evaluation points P8 to P14. In this example, the second number is set to seven or less. Therefore, a range R23 of the road 2 from the evaluation point P8 to the evaluation point P14 corresponds to the third range in which there are a second number or more of consecutive evaluation points Pk where the directional change is determined to be neither a clockwise change nor a counterclockwise change based on the change angle Δθn. Therefore, the execution unit 22 distinguishes the range R23 as a straight road section.

Here, the execution unit 22 may integrate a fourth range of the road 2 that is separated and not included in any of the first, second, and third ranges into a range among the first, second, and third ranges that is adjacent to the fourth range. For example, in the example of Fig. 9, a range R22 of the road 2 from the evaluation point P6 to the evaluation point P7 corresponds to the fourth range. Therefore, the execution unit 22 may integrate the range R22 into the range R21 adjacent to the range R22. Therefore, in this case, the execution unit 22 distinguishes the range R21 and the range R22 as a right corner section.

In the above example, the execution unit 22 integrates the fourth range into a range (that is, a range preceding the fourth range) adjacent to the fourth range among the first range, second range, and third range, of which passing time precedes passing time of the fourth range. However, the execution unit 22 may also integrate the fourth range into a range (that is, a following range) adjacent to the fourth range among the first range, second range, and third range, of which passing time follows passing time of the fourth range. For example, in the example of Fig. 9, the execution unit 22 may integrate the range R22 into the range R23 adjacent to the range R22. In this case, the execution unit 22 distinguishes the range R22 and the range R23 as a straight road section.

In step S107 after step S106 in Fig. 3, the execution unit 22 executes a rider assistance operation based on a section distinction result, and the process returns to step S102.

As described above, the execution unit 22 can execute various rider assistance operations. An example of the rider assistance operation executed in step S107 will be described below.

The execution unit 22 can, for example, execute a notification operation as a rider assistance operation to notify the rider based on the section distinction result.

For example, the execution unit 22 may cause the display device 13 to display the section distinction result in the notification operation. In this case, the execution unit 22 may, for example, cause the display device 13 to display an image illustrating the road 2 or the travel trajectory 3 that the straddle-type vehicle 1 will pass through in the future, and an image illustrating which ranges of the road 2 are right corner sections, which ranges are left corner sections, and which ranges are straight road sections. This allows the rider to grasp how the road 2 on which the straddle-type vehicle 1 will pass through in the future curves.

For example, in the example of Fig. 8 or the example of Fig. 9, the execution unit 22 may cause the display device 13 to display an image illustrating the road 2 or the travel trajectory 3, and an image indicating that the range (that is, the range R11 or the ranges R21, R22) from the evaluation point P1 to the evaluation point P7 is a right corner section, and that the range (that is, the range R12 or the range R23) from the evaluation point P8 to the evaluation point P14 is a straight road section.

The execution unit 22 may perform the above-described notification operation by a method other than displaying on the display device 13. For example, the execution unit 22 may perform the above-described notification operation using a display device provided on an item (for example, a helmet) worn by the rider. Furthermore, for example, the execution unit 22 may perform the above-described notification operation using a sound output device provided to the straddle-type vehicle 1 or to an item worn by the rider.

Furthermore, the execution unit 22 can execute, as a rider assistance operation, a speed control operation that automatically controls the speed of the straddle-type vehicle 1 based on the section distinction result, for example. The execution unit 22 can automatically control the speed of the straddle-type vehicle 1 by controlling the operation of the engine 11 and the hydraulic pressure control unit 12, for example.

For example, the execution unit 22 may execute adaptive cruise control as the speed control operation. Adaptive cruise control is an operation that automatically controls the speed of the straddle-type vehicle 1 to make the straddle-type vehicle 1 to travel following a preceding vehicle. For example, in adaptive cruise control, when a preceding vehicle is detected by the surrounding environment sensor 15, the execution unit 22 automatically controls the speed of the straddle-type vehicle 1 so that a positional relationship between the straddle-type vehicle 1 and the preceding vehicle is adjusted to a target positional relationship. This allows the straddle-type vehicle 1 to travel following the preceding vehicle. Also, for example, in adaptive cruise control, when a preceding vehicle is not detected by the surrounding environment sensor 15, the execution unit 22 controls the speed of the straddle-type vehicle 1 to a set speed. This allows the straddle-type vehicle 1 to travel at a constant speed.

In an example in which adaptive cruise control is executed as a speed control operation, the execution unit 22 may, for example, slow down the straddle-type vehicle 1 when it is determined based on the section distinction result that the straddle-type vehicle 1 is located just before a point where the straddle-type vehicle 1 enters a right corner section or a left corner section from a straight road section. This prevents the straddle-type vehicle 1 from entering a right corner section or a left corner section at an excessively high speed, thereby stabilizing behavior of the straddle-type vehicle 1 while traveling around a curve.

In addition, in an example in which adaptive cruise control is executed as a speed control operation, the execution unit 22 may accelerate the straddle-type vehicle 1, for example, when it is determined based on the section distinction result that the straddle-type vehicle 1 is located just before a point where the straddle-type vehicle 1 enters a straight road section from a right corner section or a left corner section. This prevents the straddle-type vehicle 1 from entering a straight road section at an excessively low speed, thereby stabilizing the behavior of the straddle-type vehicle 1 while traveling straight.

As described above, the execution unit 22 sets a plurality of evaluation points Pk on the road 2 that the straddle-type vehicle 1 will pass through in the future. Then, the execution unit 22 evaluates the change angle Δθn at each evaluation point Pk, with each evaluation point Pk as an evaluation target. Then, the execution unit 22 distinguishes the road 2 into any one of a right corner section, a left corner section, and a straight road section based on the change angle Δθn, and performs rider assistance operations based on the section distinction result. This allows the straddle-type vehicle 1 to assist the rider after grasping how the road 2 that the straddle-type vehicle 1 will pass through in the future will curve. Therefore, safety can be improved.

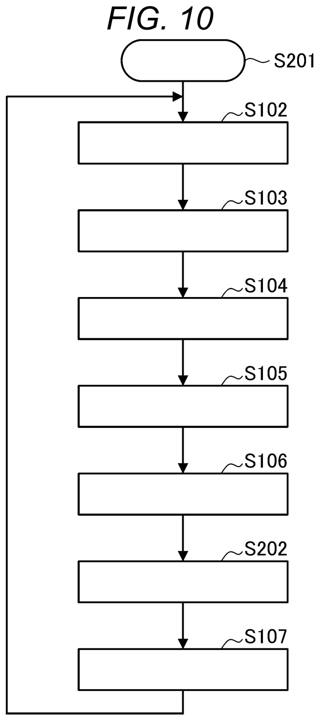

Here, the execution unit 22 may determine a degree of curvature of a section based on the change angle Δθn at each evaluation point Pk in the divided section, and perform rider assistance operation based on the determination result of the degree of curvature of the section in addition to the section distinction result. An example of such processing will be described below with reference to Fig. 10.

Fig. 10 is a flowchart illustrating an example of the flow of processing performed by the control device 20, which is different from the example illustrated Fig. 3. Step S201 in Fig. 10 corresponds to the start of the process flow illustrated in Fig. 10. For example, the process flow illustrated in Fig. 10, like the process flow illustrated in Fig. 3 described above, starts when the rider assistance operation executed in step S107 described below is enabled (that is, when it becomes executable).

The process flow illustrated in Fig. 10 corresponds to an example in which step S202 is added after step S106 in the process flow illustrated in Fig. 3.

In the process flow illustrated in Fig. 10, in step S202 after step S106, the execution unit 22 determines a degree of curvature of a section.

In step S202, the execution unit 22 determines the degree of curvature of each of the plurality of sections distinguished in step S106 as a determination target. Hereinafter, the section as the determination target for the degree of curvature will be referred to as a target section.

The execution unit 22 determines the degree of curvature of the target section based on, for example, an amount of (that is, the absolute value of the change angle Δθn) directional change at each evaluation point Pk in the target section relative to the previous evaluation point Pk.

For example, when a first condition is satisfied that there are third number or more of consecutive evaluation points Pk in the target section where the amount of directional change of each evaluation point Pk is determined to be equal to or greater than the first threshold value based on the change angle Δθn, the execution unit 22 determines that the degree of curvature is greater than when the first condition is not satisfied. In other words, when there is a range within the target section where there are the third number or more of consecutive evaluation points Pk where the absolute value of the change angle Δθn of each evaluation point Pk is equal to or greater than the first threshold value, the execution unit 22 determines that the first condition is satisfied and determines that the degree of curvature is greater than when the first condition is not satisfied.

The first threshold value is larger than the reference value described above, and can be set to, for example, a value that allows appropriate determination of whether the amount of directional change at the evaluation point Pk is relatively large. The third number is smaller than the first number described above, and can be set to a value that allows, for example, appropriate determination of whether evaluation points Pk with a relatively large amount of directional change are connected in a relatively long range in the target section.

Here, the evaluation point Pk where the absolute value of the change angle Δθn is equal to or greater than the first threshold value is a point (that is, a point where the curve is relatively sharp) where the amount of directional change is relatively large. Therefore, when there is a range within the target section where the third number or more of evaluation points Pk as described above are consecutive, it can be determined that the degree of curvature of the target section is greater than when there is no such range within the target section.

Furthermore, when the first condition is satisfied, if a second condition is satisfied, that is, if there are a fourth number or more of consecutive evaluation points Pk in the target section where an amount of directional change of each evaluation point Pk is determined to be equal to or greater than a second threshold value that is greater than the first threshold value based on the change angle Δθn, the execution unit 22 may determine that the degree of curvature is greater than when the second condition is not satisfied, for example. In other words, when there is a range within the target section where there are the fourth number or more of consecutive evaluation points Pk where the absolute value of the change angle Δθn of each evaluation point Pk is equal to or greater than the second threshold value, the execution unit 22 may determine that the second condition is satisfied and determine that the degree of curvature is greater than when the second condition is not satisfied.

The second threshold value is greater than the first threshold value described above, and can be set to, for example, a value that allows appropriate determination of whether the amount of directional change at the evaluation point Pk is significantly large. The fourth number is smaller than the first number described above, and can be set to a value that allows, for example, appropriate determination of whether evaluation points Pk with significantly large amounts of directional change are connected in a relatively long range in the target section.

Here, an evaluation point Pk where the absolute value of the change angle Δθn is equal to or greater than the second threshold value is a point (that is, a point where the curve is particularly sharp compared to an evaluation point Pk where the absolute value of the change angle Δθn is equal to or greater than the first threshold value and less than the second threshold value) where the amount of directional change is significantly large. Therefore, when there is a range within the target section where the fourth number or more of evaluation points Pk as described above are consecutive, it can be determined that the degree of curvature of the target section is greater than when there is no such range within the target section.

The fourth number may be smaller than the third number or may be the same as the third number. However, a range of consecutive points with particularly sharp curves generally tends to be shorter than a range of consecutive points with less sharp curves. Therefore, by making the fourth number smaller than the third number, it is possible to accurately detect a range in which points with particularly sharp curves are continuous.

In step S107 after step S202 in Fig. 10, the execution unit 22 executes the rider assistance operation, and the process returns to step S102.

In the example of Fig. 10, in step S107, the execution unit 22 executes the rider assistance operation based on the section distinction result as well as the determination result of the degree of curvature of each section. As described above, in step S107, the execution unit 22 can execute, for example, a notification operation or a speed control operation as the rider assistance operation.

For example, in the notification operation, the execution unit 22 may cause the display device 13 to display the determination result of the degree of curvature of each section in addition to the section distinction result. In this case, the execution unit 22 may cause the display device 13 to display, for example, an image illustrating the road 2 or the travel trajectory 3 that the straddle-type vehicle 1 will pass through in the future, an image illustrating which ranges of the road 2 are right corner sections, which ranges are left corner sections, and which ranges are straight road sections, as well as an image illustrating the degree of curvature of each section. This allows the rider to grasp not only how the road 2 that the straddle-type vehicle 1 will pass through in the future curves, but also the degree of curvature in each section of the road 2 that the straddle-type vehicle 1 will pass through in the future.

As described above, the execution unit 22 may perform the above-described notification operation by a method other than displaying on the display device 13.

Further, for example, the execution unit 22 may execute adaptive cruise control based on the determination result of the degree of curvature of each section in addition to the section distinction result. For example, when the execution unit 22 determines based on the section distinction result that the straddle-type vehicle 1 is located just before a point where it will enter a right corner section or a left corner section from a straight road section, the execution unit 22 may change the degree to which the straddle-type vehicle 1 is decelerated based on the determination result of the degree of curvature of the corner section that the straddle-type vehicle 1 will soon enter. For example, in the above case, the execution unit 22 may decelerate the straddle-type vehicle 1 more strongly the greater the degree of curvature of the corner section that the straddle-type vehicle 1 will soon enter. This makes it possible to more effectively stabilize the behavior of the straddle-type vehicle 1 while traveling around a curve, depending on the degree of curvature of the corner section.

As described above, the execution unit 22 determines the degree of curvature of the section (specifically, the target section) based on the change angle Δθn of each evaluation point Pk in the section, and performs rider assistance operation based on the section distinction result as well as the determination result of the degree of curvature of the section. This allows the rider to be assisted by understanding not only how the road 2 that the straddle-type vehicle 1 will pass through in the future is curved, but also the degree of curvature in each section of the road 2 that the straddle-type vehicle 1 will pass through in the future. Therefore, safety can be improved more effectively.

### <Effects of Control Device>

Effects of the control device 20 according to the embodiment of the present invention will be described.

The control device 20 includes the execution unit 22 that executes rider assistance operation to assist a rider. The execution unit 22 then sets a plurality of evaluation points Pk on the road 2 that the straddle-type vehicle 1 will pass through in the future, each of which has a different passing time, which is the time at which the straddle-type vehicle 1 will pass, evaluates, with each of the plurality of evaluation points Pk as an evaluation target, an index (in the above example, the change angle Δθn) of the change in the traveling direction Dn of the straddle-type vehicle 1 at the target evaluation point Pn, which is the evaluation point Pk as the evaluation target, relative to the traveling direction Dn-1 at the preceding evaluation point Pn-1, which is an evaluation point Pk of which the passing time is earlier than the target evaluation point Pn, distinguishes the road 2 into any one of a right corner section, a left corner section, and a straight road section based on the index, and performs rider assistance operation based on the section distinction result. This allows the straddle-type vehicle 1 to assist the rider after grasping how the road 2 that the straddle-type vehicle 1 will pass through in the future will curve. Therefore, safety can be improved.

In the above example, an example in which the index of the directional change is the change angle Δθn is described. However, the index of the directional change may be an index other than the change angle Δθn. For example, the index of the directional change may be an index that indicates the rotation direction of the directional change but does not indicate the amount of directional change.

Preferably, in the control device 20, the preceding evaluation point Pn-1 is an evaluation point Pk adjacent to the target evaluation point Pn. This allows for more accurate evaluation of the directional change of the target evaluation point Pn compared to when an evaluation point Pk that is two or more points before the target evaluation point Pn is used as the preceding evaluation point Pn-1 (that is, an index that more accurately represents the directional change of the target evaluation point Pn can be obtained). Therefore, it is possible to assist the rider by more accurately grasping how the road 2 that the straddle-type vehicle 1 will pass through in the future will curve. Therefore, safety can be improved more effectively.

However, an evaluation point Pk that is two or more points before the target evaluation point Pn may be adopted as the preceding evaluation point Pn-1.

Preferably, in the control device 20, the execution unit 22 distinguishes a first range of the road 2, which is a range where there are a first number or more of consecutive evaluation points Pk where the directional change is determined to be a clockwise change based on the index (in the above example, the change angle Δθn), as a right corner section; distinguishes a second range of the road 2, which is a range where there are a first number or more of consecutive evaluation points Pk where the directional change is determined to be a counterclockwise change based on the index, as a left corner section, and distinguishes a third range of the road 2, which is a range where there are a second number or more of consecutive evaluation points Pk where the directional change is determined to be neither a clockwise change nor a counterclockwise change based on the index, as a straight road section. This allows the road 2 to be appropriately distinguished into any of a right corner section, a left corner section, and a straight road section.

However, the execution unit 22 may distinguish the road 2 into any of a right corner section, a left corner section, and a straight road section using a method other than the above method. For example, the execution unit 22 may distinguish a range that includes evaluation points Pk where the directional change is determined to be a clockwise change at a density equal to or greater than a predetermined density as a right corner section, a range that includes evaluation points Pk where the directional change is determined to be a counterclockwise change at a density equal to or greater than a predetermined density as a left corner section, and a range that includes evaluation points Pk where the directional change is determined to be neither a clockwise change nor a counterclockwise change at a density equal to or greater than a predetermined density into a straight road section.

Preferably, in the control device 20, the second number is greater than the first number. This allows a section long enough for the rider to accelerate safely to be distinguished as a straight road section.

Preferably, in the control device 20, the execution unit 22 integrates a fourth range of the road 2 that is separated and not included in any of the first, second, and third ranges into a range among the first, second, and third ranges that is adjacent to the fourth range. This allows the road 2 to be appropriately distinguished into any of a right corner section, a left corner section, and a straight road section.

Preferably, in the control device 20, the execution unit 22 determines the degree of curvature of the section based on an index (in the above example, the change angle Δθn) at each evaluation point Pk in the section, and performs rider assistance operation based on the determination result of the degree of curvature in addition to the section distinction result. This allows the rider to be assisted by understanding not only how the road 2 that the straddle-type vehicle 1 will pass through in the future is curved, but also the degree of curvature in each section of the road 2 that the straddle-type vehicle 1 will pass through in the future. Therefore, safety can be improved more effectively.

Preferably, in the control device 20, the execution unit 22 determines that the degree of curvature is greater when a first condition is satisfied that there are the third number or more of consecutive evaluation points Pk in a section where the amount of directional change is determined to be equal to or greater than a first threshold value based on an index (in the above example, the change angle Δθn) compared to when the first condition is not satisfied. This allows the degree of curvature of the section to be appropriately determined taking into consideration the tendency of the amount of directional change in the section.

However, the first condition is not limited to the above-described condition. For example, the first condition may be a condition that the density of evaluation points Pk in the section where the amount of directional change is determined to be equal to or greater than a first threshold value is equal to or greater than a predetermined density.

Preferably, in the control device 20, when the first condition is satisfied, if a second condition is satisfied that there are the fourth number or more of consecutive evaluation points Pk in the section where the amount of directional change is determined to be equal to or greater than the second threshold value that is greater than the first threshold value based on the index (in the above example, the change angle Δθn), the execution unit 22 determines that the degree of curvature is greater than when the second condition is not satisfied. This allows the degree of curvature of a section to be determined more accurately, taking into account the tendency of the amount of directional change within the section.

However, the second condition is not limited to the above condition. For example, the second condition may be a condition that the density of evaluation points Pk in the section where the amount of directional change is determined to be equal to or greater than the second threshold value is equal to or greater than a predetermined density.

The execution unit 22 performs processing to determine that the degree of curvature is greater when the first condition is satisfied than when the first condition is not satisfied, but does not have to perform processing to determine that the degree of curvature is greater when the second condition is satisfied than when the second condition is not satisfied.

Preferably, in the control device 20, the fourth number is smaller than the third number. This makes it possible to accurately detect ranges where there are consecutive points with particularly sharp curves.

Preferably, in the control device 20, the rider assistance operation includes a notification operation for providing a notification to the rider. This allows the notification operation to be performed after grasping how the road 2 that the straddle-type vehicle 1 will pass through in the future is curved. Therefore, for example, it is possible to grasp how the road 2 that the straddle-type vehicle 1 will pass through in the future curves.

Preferably, in the control device 20, the rider assistance operation includes a speed control operation that automatically controls the speed of the straddle-type vehicle 1. This allows the speed control operation to be performed after grasping how the road 2 that the straddle-type vehicle 1 will pass through in the future will curve. Therefore, for example, the behavior of the straddle-type vehicle 1 can be stabilized.

In the above, the notification operation and the speed control operation are described as the rider assistance operations that are executed based on the section distinction result. However, the rider assistance operations that are executed based on the section distinction result are not particularly limited. For example, the execution unit 22 may execute only one of the notification operation and the speed control operation, or may execute both the notification operation and the speed control operation, based on the section distinction result. Furthermore, for example, the execution unit 22 may perform rider assistance operations (for example, operations that automatically perform various settings (for example, suspension mode settings, or the like) of the straddle-type vehicle 1) other than a notification operation and a speed control operation based on the section distinction result.

The present invention is not limited to the description of the embodiment. For example, only part of the embodiment may be implemented.

## Claims

1. A control device (20) for a rider assistance system (100) that assists a rider of a straddle-type vehicle (1), comprising:
an execution unit (22) that executes a rider assistance operation to assist the rider, wherein
the execution unit (22)
sets a plurality of evaluation points (Pk) on a road (2) that the straddle-type vehicle (1) will pass through in the future, the evaluation points (Pk) having different passing times that are times when the straddle-type vehicle (1) will pass through,
evaluates, with each of the plurality of evaluation points (Pk) as an evaluation target, an index (Δθn) of change in a traveling direction (Dn) of the straddle-type vehicle (1) at a target evaluation point (Pn), which is the evaluation point (Pk) as the evaluation target, relative to a traveling direction (Dn-1) at a preceding evaluation point (Pn-1), which is the evaluation point (Pk) of which the passing time is earlier than the target evaluation point (Pn),
distinguishes the road (2) into any one of a right corner section, a left corner section, and a straight road section based on the index (Δθn), and
executes the rider assistance operation based on a distinction result of the section.

2. The control device according to claim 1, wherein the preceding evaluation point (Pn-1) is the evaluation point (Pk) adjacent to the target evaluation point (Pn).

3. The control device according to claim 2, wherein
the execution unit (22)
distinguishes a first range, which is a range in the road (2) in which there are a first number or more of consecutive evaluation points (Pk) where the change is determined to be a clockwise change based on the index (Δθn), as the right corner section,
distinguishes a second range, which is a range in the road (2) in which there are the first number or more of consecutive evaluation points (Pk) where the change is determined to be a counterclockwise change based on the index (Δθn), as the left corner section, and
distinguishes a third range, which is a range in the road (2) in which there are a second number or more of consecutive evaluation points (Pk) where the change is determined to be neither a clockwise change nor a counterclockwise change based on the index (Δθn), as the straight road section.

4. The control device according to claim 3, wherein the second number is greater than the first number.

5. The control device according to claim 3, wherein the execution unit (22) integrates a fourth range of the road (2) that is not included in any of the first range, the second range, and the third range and is separated into a range adjacent to the fourth range among the first range, the second range, and the third range.

6. The control device according to claim 1, wherein the execution unit (22) determines a degree of curvature of the section based on the index (Δθn) at each of the evaluation points (Pk) in the section, and executes the rider assistance operation based on a determination result of the degree of curvature in addition to the distinction result of the section.

7. The control device according to claim 2, wherein the execution unit (22) determines a degree of curvature of the section based on the index (Δθn) at each of the evaluation points (Pk) in the section, and executes the rider assistance operation based on a determination result of the degree of curvature in addition to the distinction result of the section.

8. The control device according to claim 7, wherein when a first condition is satisfied that a third number or more of consecutive evaluation points (Pk) at which an amount of change is determined to be equal to or greater than a first threshold value based on the index (Δθn) are present in the section, the execution unit (22) determines that the degree of curvature is greater than when the first condition is not satisfied.

9. The control device according to claim 8, wherein
when the first condition is satisfied,
when a second condition is satisfied that a fourth number or more of consecutive evaluation points (Pk) at which the amount of change is determined to be equal to or greater than a second threshold value that is greater than the first threshold value based on the index (Δθn) are present in the section, the execution unit (22) determines that the degree of curvature is greater than when the second condition is not satisfied.

10. The control device according to claim 9, wherein the fourth number is smaller than the third number.

11. The control device according to any one of claims 1 to 10, wherein the rider assistance operation includes a notification operation for providing a notification to the rider.

12. The control device according to any one of claims 1 to 10, wherein the rider assistance operation includes a speed control operation that automatically controls speed of the straddle-type vehicle (1).

13. A control method for a rider assistance system (100) that assists a rider of a straddle-type vehicle (1), wherein
an execution unit (22) of a control device (20) executes a rider assistance operation to assist the rider, and
the execution unit (22)
sets a plurality of evaluation points (Pk) on a road (2) that the straddle-type vehicle (1) will pass through in the future, the evaluation points (Pk) having different passing times that are times when the straddle-type vehicle (1) will pass through,
evaluates, with each of the plurality of evaluation points (Pk) as an evaluation target, an index (Δθn) of change in a traveling direction (Dn) of the straddle-type vehicle (1) at a target evaluation point (Pn), which is the evaluation point (Pk) as the evaluation target, relative to a traveling direction (Dn-1) at a preceding evaluation point (Pn-1), which is the evaluation point (Pk) of which passing time is earlier than the target evaluation point (Pn),
distinguishes the road (2) into any one of a right corner section, a left corner section, and a straight road section based on the index (Δθn), and
executes the rider assistance operation based on a distinction result of the section.
